# EUROPEAN PATENT APPLICATION

(11) **EP 4 831 247 A1**
(43) Date of publication of application: **28.10.2026**
(21) Application number: 24931101.0
(22) Date of filing: 26.08.2024
(51) Int. Cl.: C09D 4/00, C09D 125/04, C09D 163/00, C09D 5/00

(54) **POLYMER COMPOSITION FOR COATING AND COATING COMPOSITION COMPRISING SAME**

(30) Priority: 20.03.2024 KR 20240038477
(71) Applicant: Kolon Industries, Inc., Seoul 07793 (KR)
(72) Inventor: SUNG, Jong Un, Seoul 07793 (KR); KIM, Yu Sung, Seoul 07793 (KR); KIM, Sang Hun, Seoul 07793 (KR); YU, Jeong Eun, Seoul 07793 (KR); PARK, Kyong Kook, Seoul 07793 (KR)
(74) Representative: Vossius & Partner Patentanwälte Rechtsanwälte mbB
(86) International application number: PCT/KR2024/012693
(87) International publication number: WO 2025/198103

(57) **Abstract**

The present disclosure provides a polymer composition for coatings and a coating composition including the polymer composition, the polymer composition including a polymer including a unit (a) derived from a cardanol composition and a unit (b) derived from a styrenic monomer, wherein the cardanol composition has a purity greater than 85 %. The coating composition including the polymer composition for coatings may exhibit a short drying time and excellent color and coating-film properties.

## Description

### Technical Field

The present disclosure relates to a polymer composition for coatings and a coating composition including the polymer composition.

### Background Art

On surfaces of ship/heavy-duty structures, coating films are formed to protect the structures in harsh environments. These coating films, unlike coating films used on land-based structures, must withstand harsh corrosive environments while also providing safety and ease of maintenance.

The performance of the coating is greatly affected by the properties of diluents blended therein. Various non-reactive components have conventionally been added as diluents for heavy-duty epoxy coatings, including alkylphenol compounds, such as nonylphenol, dodecylphenol, and octylphenol, C₅-C₉ hydrocarbon resins, and oligomers of phenol and α-methylstyrene.

In particular, the alkylphenol compounds have been widely used as additives or surfactants for heavy-duty epoxy coatings requiring plasticizing properties. However, because the alkylphenol compounds are known to exhibit renal toxicity and endocrine-disrupting properties, their use is currently banned or increasingly restricted worldwide.

Furthermore, in a recent evaluation of hazardous environmental substances by the European Chemicals Agency (ECHA), it is being reviewed whether alpha-methylstyrenated phenol substances in phenol resins may be classified as substances of very high concern (SVHCs). In addition, customer demand for eco-friendly products is gradually increasing.

Accordingly, there is a growing need to develop a novel non-reactive diluent from bio-based raw materials.

### Disclosure of Invention

### Technical Problem

One objective of the present disclosure is to provide a polymer composition for coatings that, while prepared from a bio-based raw material, is suitable for use in a coating composition. Another objective of the present disclosure is to provide a polymer composition for coatings that may improve the color, drying time, flexibility resistance, and impact resistance of a coating composition.

### Solution to Problem

One aspect of the present disclosure relates to a polymer composition for coatings, the polymer composition including a polymer that includes a unit (a) derived from a cardanol composition and a unit (b) derived from a styrenic monomer, wherein the cardanol composition has a purity greater than 85 %.

Another aspect of the present disclosure relates to a coating composition including the polymer composition.

### Advantageous Effects of Invention

The polymer composition for coatings according to the present disclosure includes a unit (a) derived from a cardanol composition having a purity greater than 85 %, and may thereby improve color, drying time, flexibility resistance, impact resistance, and adhesion.

In particular, when the cardanol composition has a purity greater than 85 %, the amounts of non-cardanol components, such as cardol, methyl cardol, and anacardic acid, in the cardanol composition may be reduced. Accordingly, the increased cardanol content of the cardanol composition may improve the color, drying time, flexibility resistance, impact resistance, and adhesion of the coating composition.

In addition, reducing the amounts of cardol, methyl cardol, and anacardic acid in the cardanol composition may effectively reduce allergic skin rashes and similar reactions caused by these compounds.

### Best Mode for Carrying out the Invention

### Mode for the Invention

Hereinafter, various aspects and various embodiments of the present disclosure will be described in more detail.

The terms and words used in the present specification and the claims shall not be construed as being limited to their ordinary or dictionary meanings; rather, on the principle that an inventor may properly define the concept of a term in order to best describe his or her own invention, such terms and words shall be construed with meanings and concepts consistent with the technical concept of the present disclosure.

The terminology used herein is for the purpose of describing particular embodiments only and is not intended to limit the present disclosure. As used herein, the singular forms are intended to include the plural forms as well, unless the context clearly indicates otherwise. As used herein, the terms "comprise," "have," and the like are intended to specify the presence of stated features, numbers, steps, operations, components, parts, or combinations thereof set forth in the specification, but should be understood as not precluding the presence or addition of one or more other features, numbers, steps, operations, components, parts, or combinations thereof.

Specifically, a polymer composition for coatings according to one aspect of the present disclosure includes a polymer including a unit (a) derived from a cardanol composition and a unit (b) derived from a styrenic monomer, wherein the cardanol composition may have a purity greater than 85 %. For example, the purity of the cardanol composition may refer to the cardanol content of the cardanol composition.

For example, when the polymer composition for coatings includes a polymer including a unit (a) derived from a cardanol composition having a purity greater than 85 %, the increased cardanol content of the cardanol composition may improve the color, drying time, flexibility resistance, impact resistance, and adhesion of the coating composition.

In addition, when the cardanol composition has a purity greater than 85 %, the amounts of non-cardanol components, such as cardol, methyl cardol, and anacardic acid, may be reduced. Accordingly, allergic skin rashes and similar reactions caused by cardol, methyl cardol, anacardic acid, and the like may be effectively reduced.

In an embodiment, the cardanol composition may have a purity of 86 % or more, 88 % or more, 92 % or more, or 95 % or more. For example, as the purity of the cardanol composition increases, the cardanol content of the cardanol composition also increases. Accordingly, a coating composition including a polymer composition for coatings prepared from the cardanol composition may exhibit improved color, reduced drying time, and improved flexibility resistance, impact resistance, and adhesion.

In an embodiment, the cardanol composition may further include, in addition to cardanol, components such as a cardol-based compound and anacardic acid. For example, the cardol-based compound may include cardol or methyl cardol.

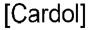

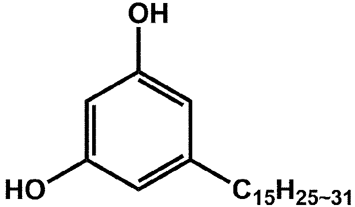

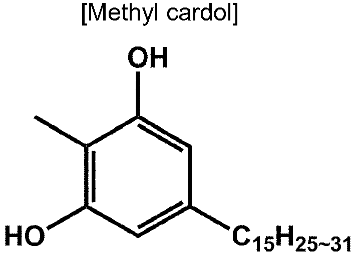

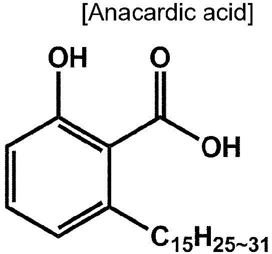

In the cardol, methyl cardol, and anacardic acid structures, the -C₁₅H₂₅-₃₁- may be -C₁₅H₃₁, -C₁₅H₂₉, -C₁₅H₂₇, or -C₁₅H₂₅.

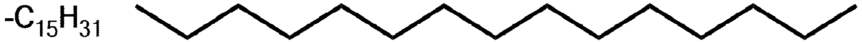

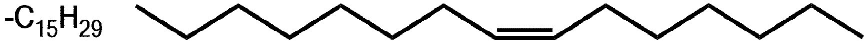

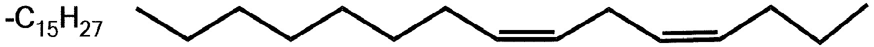

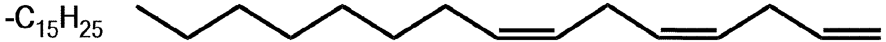

In an embodiment, the content of cardol-based compounds in the cardanol composition may be less than 15 wt%, based on the total weight of the cardanol composition. For example, when the content of cardol-based compounds falls within the aforementioned range, the cardanol purity of the cardanol composition may increase, and a coating composition including a polymer composition for coatings prepared from the cardanol composition may exhibit improved color, reduced drying time, and improved flexibility resistance, impact resistance, and adhesion.

For example, the content of cardol-based compounds in the cardanol composition may be less than 13 wt%, less than 11 wt%, less than 9 wt%, less than 7 wt%, or less than 5 wt%, based on the total weight of the cardanol composition.

According to one embodiment, the content of anacardic acid in the cardanol composition may be less than 1 wt% based on the total weight of the cardanol composition. For example, the content of anacardic acid in the cardanol composition may be less than 1 wt%, less than 0.5 wt%, or less than 0.1 wt%, based on the total weight of the cardanol composition. For example, when the content of anacardic acid in the cardanol composition falls within the aforementioned range, the cardanol purity of the cardanol composition may increase, and a coating composition including a polymer composition for coatings prepared from the cardanol composition may exhibit improved color, reduced drying time, and improved flexibility resistance, impact resistance, and adhesion. In addition, allergic skin rashes that may result from skin contact with anacardic acid may be prevented.

In an embodiment, the cardanol composition may have a weight-average molecular weight (Mw) of 400 g/mol to 600 g/mol and a number-average molecular weight (Mn) of 400 g/mol to 600 g/mol. For example, the cardanol composition may have a weight-average molecular weight (Mw) of 400 g/mol to 550 g/mol or 450 g/mol to 550 g/mol. For example, the cardanol composition may have a number-average molecular weight (Mn) of 400 g/mol to 550 g/mol or 450 g/mol to 550 g/mol.

In an embodiment, in the polymer, a weight ratio of the unit (a) derived from the cardanol composition to the unit (b) derived from the styrenic monomer may range from 1:15 to 15:1. For example, when, in the polymer, the weight ratio of the unit (a) derived from the cardanol composition to the unit (b) derived from the styrenic monomer falls within the aforementioned range, a coating composition including a polymer composition for coatings prepared from the cardanol composition may exhibit improved color, drying time, flexibility resistance, impact resistance, and adhesion. For example, when, in the polymer, the weight ratio of the unit (a) derived from the cardanol composition to the unit (b) derived from the styrenic monomer falls within the aforementioned range, the polymer may have an increased proportion of -OH, thereby further shortening the drying time of a coating composition including the polymer composition for coatings.

In an embodiment, in the polymer, a molar ratio of the unit (a) derived from the cardanol composition to the unit (b) derived from the styrenic monomer may range from 1:12 to 12:1, from 1:10 to 10:1, from 1:7 to 7:1, from 1:5 to 5:1, or from 1:3 to 3:1.

For example, in the polymer, the molar ratio of the unit (a) derived from the cardanol composition to the unit (b) derived from the styrenic monomer may range from 1:1 to 12:1, from 3:1 to 12:1, from 5:1 to 12:1, from 1:1 to 10:1, from 1:1 to 7:1, or from 1:1 to 5:1. For example, when the molar ratio of the unit (a) derived from the cardanol composition to the unit (b) derived from the styrenic monomer falls within the aforementioned range, the -OH content may increase, thereby shortening the drying time.

In an embodiment, the cardanol composition may include a compound represented by Formula 1.

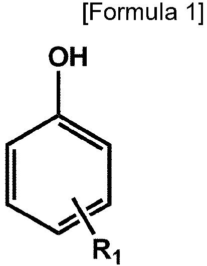

In Formula 1,
R₁ may be an alkyl group having 12 to 18 carbon atoms, an alkenyl group having 12 to 18 carbon atoms, a dienyl group having 12 to 18 carbon atoms, or a trienyl group having 12 to 18 carbon atoms.

For example, in Formula 1, R₁ may be an alkenyl group having 14 to 16 carbon atoms, a dienyl group having 14 to 16 carbon atoms, or a trienyl group having 14 to 16 carbon atoms.

In an embodiment, in Formula 1, R₁ may be a pentadecanyl group, a pentadecenyl group, a pentadecadienyl group, or a pentadecatrienyl group.

For example, in Formula 1, R₁ may be -C₁₅H₃₁, -C₁₅H₂₉, -C₁₅H₂₇, or -C₁₅H₂₅.

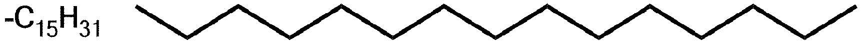

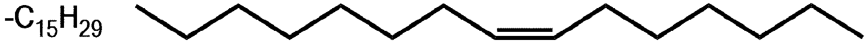

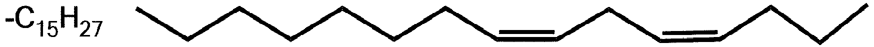

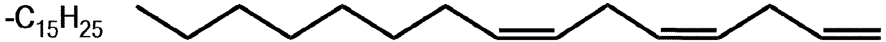

In an embodiment, the styrenic monomer may be represented by Formula 2.

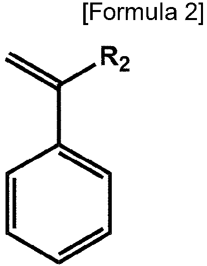

In Formula 2,
R₂ is hydrogen or an alkyl group having 1 to 15 carbon atoms.

In an embodiment, in Formula 2, R₂ may be hydrogen, a methyl group, an ethyl group, or a propyl group. For example, in Formula 2, R₂ may be hydrogen or a methyl group.

In an embodiment, the styrenic monomer may include styrene, alpha-methylstyrene, or a combination thereof.

In an embodiment, the polymer including the unit (a) derived from the cardanol composition and the unit (b) derived from the styrenic monomer may be represented by Formula 3.

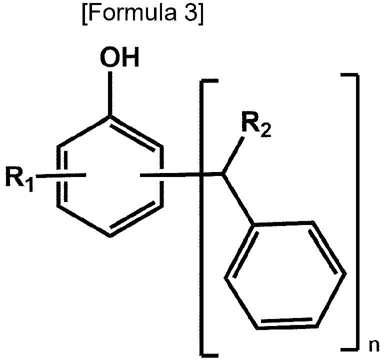

In Formula 3,
R₁ is an alkyl group having 12 to 18 carbon atoms, an alkenyl group having 12 to 18 carbon atoms, a dienyl group having 12 to 18 carbon atoms, or a trienyl group having 12 to 18 carbon atoms, R₂ is hydrogen or an alkyl group having 1 to 15 carbon atoms, and n is an integer of 1 to 4.

For the definitions of R₁ and R₂ in Formula 3, reference may be made to the descriptions of R₁ and R₂ in Formulae 1 and 2, respectively.

For example, when n is 1, the polymer includes one bracketed substituent; when n is 2, the polymer may include two bracketed substituents; when n is 3, the polymer may include three bracketed substituents; and when n is 4, the polymer may include four bracketed substituents.

In an embodiment, in Formula 3, n may be an integer of 1 or 2.

In an embodiment, the polymer may include a first compound represented by Formula 3-1, a second compound represented by Formula 3-2, or a combination thereof.

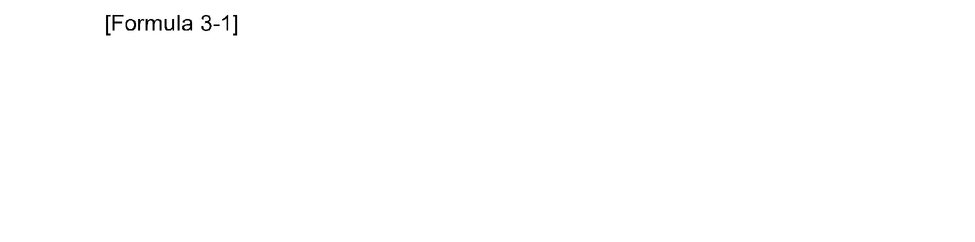

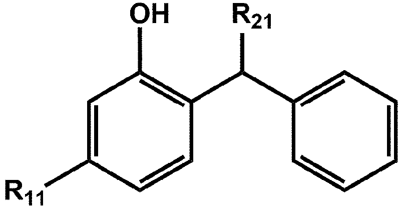

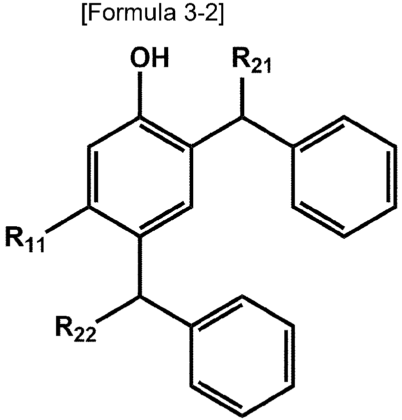

In Formulas 3-1 and 3-2,
R₁₁ is an alkyl group having 12 to 18 carbon atoms, an alkenyl group having 12 to 18 carbon atoms, a dienyl group having 12 to 18 carbon atoms, or a trienyl group having 12 to 18 carbon atoms, and
R₂₁ and R₂₂ are each independently hydrogen or an alkyl group having 1 to 15 carbon atoms.

In Formulas 3-1 and 3-2, for the definition of R₁₁, reference may be made to the description of R₁ herein, and for the definitions of R₂₁ and R₂₂, reference may be made to the description of R₂ herein.

In an embodiment, in the polymer, a ratio of the number of moles of the first compound to the number of moles of the second compound may range from 0.1 to 10.

For example, in the polymer, the ratio of the number of moles of the first compound to the number of moles of the second compound may range from 0.2 to 10, from 0.3 to 10, from 0.5 to 10, from 0.1 to 5, from 0.1 to 3, from 0.1 to 2, or from 0.5 to 2.

In an embodiment, the polymer composition may have a viscosity of 40 to 1,000 cps. When the viscosity of the polymer composition falls within the aforementioned range, the polymer composition for coatings may be more readily incorporated as a diluent into the coating composition described below. In addition, the processability and coatability of the coating composition described below may be improved. For example, the polymer composition may have a viscosity of 40 to 850 cps, 40 to 800 cps, 40 to 700 cps, 40 to 600 cps, 40 to 500 cps, or 50 to 500 cps.

In an embodiment, the polymer composition may have a Gardner color value of 4 or less. For example, the polymer composition may have a Gardner color value of 3.8 or less, 3.7 or less, or 3.6 or less. For example, using two or more catalysts together during preparation of the polymer composition may allow the polymer composition to more readily achieve a Gardner color value within the aforementioned range. For example, the two or more catalysts may include a phosphoric acid-based catalyst and a boron trifluoride-based catalyst. For example, the two or more catalysts may include phosphoric acid and boron trifluoride phenolate.

In an embodiment, the polymer composition may have a weight-average molecular weight (Mw) of 500 g/mol to 1,000 g/mol and a number-average molecular weight (Mn) of 400 g/mol to 800 g/mol.

For example, the polymer composition may have a weight-average molecular weight (Mw) of 500 to 900 g/mol, 500 to 800 g/mol, 500 to 750 g/mol, or 540 to 750 g/mol.

For example, the polymer composition may have a number-average molecular weight (Mn) of 400 to 700 g/mol, 400 to 650 g/mol, or 410 to 640 g/mol.

In an embodiment, the polymer composition may be a polymer composition for epoxy coatings. For example, the polymer composition may be used in a coating composition including an epoxy polymer.

Another aspect of the present disclosure provides a coating composition including the polymer composition for coatings.

In an embodiment, the coating composition may include an epoxy polymer and the polymer composition for coatings described above. In an embodiment, the epoxy polymer may be a bisphenol A-type epoxy polymer. For example, the bisphenol A-type epoxy polymer may be a polymerization product of bisphenol A and epichlorohydrin.

In an embodiment, the content of the polymer composition for coatings in the coating composition may range from 1 to 30 wt%, based on the total weight of the coating composition.

In an embodiment, the coating composition may further include a pigment, a solvent, or an additive.

Examples of the pigment include inorganic pigments, organic pigments, and the like. The inorganic pigment may be one or more selected from the group consisting of chromates (chrome yellow, chrome vermilion), ferrocyanides (Prussian blue), sulfides (cadmium yellow, cadmium red), oxides (titanium oxide, Bengala, iron black, zinc oxide), sulfates (barium sulfate, lead sulfate), silicates (ultramarine, calcium silicate), carbonates (calcium carbonate, magnesium carbonate), phosphates (cobalt violet), metal powders (aluminum powder, bronze), and carbon materials (carbon black).

The organic pigment may be one or more selected from the group consisting of azo pigments (benzidine yellow, Hansa yellow, Vulcan orange, permanent red F5R, carmine 6B, lake red C, Chromophtal red, Chromophtal yellow) and phthalocyanine pigments (phthalocyanine blue, phthalocyanine green).

Examples of the solvent include aromatic hydrocarbon solvents, such as toluene, xylene, Solvesso #100, Solvesso #150, and the like; aliphatic hydrocarbon solvents, such as hexane, heptane, octane, decane, and the like; and ester solvents, such as methyl acetate, ethyl acetate, isopropyl acetate, butyl acetate, amyl acetate, ethyl formate, butyl propionate, and the like. Examples of water-miscible organic solvents that may be used include alcohol solvents, such as methanol, ethanol, propanol, and butanol; ketone solvents, such as acetone, methyl ethyl ketone, and cyclohexanone; and glycol ether solvents, such as ethylene glycol (mono- or di-)methyl ether, ethylene glycol (mono- or di-)ethyl ether, ethylene glycol monopropyl ether, ethylene glycol monoisopropyl ether, ethylene glycol monobutyl ether, diethylene glycol (mono- or di-)methyl ether, diethylene glycol (mono- or di-)ethyl ether, diethylene glycol monoisopropyl ether, diethylene glycol monobutyl ether, triethylene glycol (mono- or di-)methyl ether, propylene glycol (mono- or di-)methyl ether, propylene glycol monopropyl ether, propylene glycol monobutyl ether, and dipropylene glycol (mono- or di-)methyl ether.

Examples of the additive include various slip agents, defoaming agents, leveling agents, and the like. The additive may also include, as a curing aid, another curing agent such as a melamine polymer, a benzoguanamine polymer, or an isocyanate polymer.

Hereinafter, the present disclosure will be described in further detail through Examples. These Examples are provided solely for the purpose of illustrating the present disclosure in greater detail, and it will be apparent to those of ordinary skill in the art to which the present disclosure pertains that the scope of the present disclosure is not limited thereby.

### Example 1

Into a four-necked flask equipped with a stirrer, a condenser, and a thermometer, 750 g (2.505 mol) of a cardanol composition and 400 g of xylene were added, and the temperature was raised to 50 °C. The cardanol composition used had a purity of 96 %, a viscosity of 48 cps, a Gardner color of 2.2 (G), a weight-average molecular weight (Mw) of 516 g/mol, and a number-average molecular weight (Mn) of 512 g/mol. In addition, the content of cardol-based compounds in the cardanol composition was 4 wt% based on the total weight of the cardanol composition.

5.9 g of phosphoric acid was added thereto, and the mixture was stirred for 20 minutes. 7.87 g of boron trifluoride phenolate was then added, and the mixture was stirred for an additional 20 minutes. 296 g (2.505 mol) of alpha-methylstyrene was added dropwise over 4 hours at 50 °C, and the reaction mixture was then aged for 1 hour.

Upon completion of the reaction, 321 g of water was added to the reaction mixture, the temperature was raised to 60 °C, and the reaction mixture was stirred for 30 minutes. After standing for 20 minutes, water separation was performed to remove the lower aqueous layer. This water-washing procedure was repeated twice, and the washing process was continued until the final lower aqueous layer had a pH of 5.5 to 7.5.

Degassing was performed at 175 °C under a pressure of less than 40 torr to remove the solvent, thereby preparing a polymer composition for coatings.

### Examples 2 to 13 and Comparative Example 1

Polymer compositions for coatings were prepared in the same manner as in Example 1, except that, relative to Example 1, the purity and added amount of the cardanol composition and the type and added amount of the styrenic monomer were changed as shown in Table 1 below.

### Measurement of Purity of the Cardanol Composition

The purity of each cardanol composition used in Examples 1 to 13 and Comparative Examples 1 and 2 was determined by GC-MS using an Agilent 7890B/5977B instrument under the following conditions. (Cardanol/Cardol Content Analysis) The measurement results are set forth in Table 1 below.
- Stationary phase: Agilent DB-5MS (30 m × 250 µm × 0.25 µm) (Part No. 122-5532)
- Mobile phase: He, 1 mL/min
- Temp. Program: rate 10 °C/min, temp. (°C) 80-320, hold: 10 min (320 °C)
- Total: 34 min
- Injection: 280 °C, 1.0 µL (split ratio 20:1)
- Detector: MS scan (m/z 30-550)
- Sample: 1.0 wt% in acetone (filtered through a PTFE syringe filter having a pore size of 0.45 µm)

**[Table 1]**

| | Cardanol composition | | | | Styrenic monomer | |
|---|---|---|---|---|---|---|
| | Cardanol content (Purity) | Content of cardol-based compounds | Content of anacardic acid | Added amount | Type | Added amount |
| Example 1 | 96 wt% | 4 wt% | 0 wt% | 750 g (2.505 mol) | AMS | 296 g (2.505 mol) |
| Example 2 | 94 wt% | 6 wt% | 0 wt% | 750 g (2.505 mol) | AMS | 296 g (2.505 mol) |
| Example 3 | 92 wt% | 8 wt% | 0 wt% | 750 g (2.505 mol) | AMS | 296 g (2.505 mol) |
| Example 4 | 88 wt% | 12 wt% | 0 wt% | 750 g (2.505 mol) | AMS | 296 g (2.505 mol) |
| Example 5 | 96 wt% | 4 wt% | 0 wt% | 1125 g (3.7575 mol) | AMS | 148 g (1.2525 mol) |
| Example 6 | 96 wt% | 4 wt% | 0 wt% | 375 g (1.2525 mol) | AMS | 444 g (3.7575 mol) |
| Example 7 | 96 wt% | 4 wt% | 0 wt% | 1875 g (6.2625 mol) | AMS | 148 g (1.2525 mol) |
| Example 8 | 96 wt% | 4 wt% | 0 wt% | 375 g (1.2525 mol) | AMS | 740 g (6.2625 mol) |
| Example 9 | 96 wt% | 4 wt% | 0 wt% | 3750 g (12.525 mol) | AMS | 148 g (1.2525 mol) |
| Example 10 | 96 wt% | 4 wt% | 0 wt% | 375 g (1.2525 mol) | AMS | 1480 g (12.525 mol) |
| Example 11 | 96 wt% | 4 wt% | 0 wt% | 750 g (2.505 mol) | SM | 296 g (2.505 mol) |
| Example 12 | 96 wt% | 4 wt% | 0 wt% | 750 g (2.505 mol) | AMS+SM (1:1) | 296 g (2.505 mol) |
| Example 13 | 87 wt% | 12 wt% | 1 wt% | 750 g (2.505 mol) | AMS | 296 g (2.505 mol) |
| Comparative Example 1 | 85 wt% | 15 wt% | 0 wt% | 750 g (2.505 mol) | AMS | 296 g (2.505 mol) |
| Comparative Example 2 | 84 wt% | 15 wt% | 1 wt% | 750 g (2.505 mol) | AMS | 296 g (2.505 mol) |

### Evaluation Example 1

The viscosity, Gardner color, weight-average molecular weight (Mw), and number-average molecular weight (Mn) of the polymer compositions for coatings prepared according to Examples 1 to 13 and Comparative Examples 1 and 2 were measured, and the results are set forth in Table 2 below.

Resin viscosity was measured using a Brookfield viscometer. A spindle suitable for the resin viscosity was selected and mounted on the Brookfield viscometer. The liquid resin was held at 25 °C in a constant-temperature bath, and its viscosity was then measured.

Gardner color was measured in accordance with ASTM D1544 using a color meter.

Weight-average molecular weight (Mw), number-average molecular weight (Mn), and PDI were measured by gel permeation chromatography (GPC) using an Agilent instrument. The columns used consisted of four columns packed with a styrenedivinylbenzene copolymer: HR 0.5 (Mw 0-1,000, 60 Å), HR1 (Mw 100-5,000, 120 Å), HR2 (Mw 500-20,000, 500 Å), and HR 4E (Mw 50-100,000, mixture). Detection was performed using a refractive-index (RI) detector. ULC/MS-grade THF was used as the eluent. Fifteen polystyrene standards (94 (phenol)-954,000) were used as external standards. Each sample was prepared by dissolving 0.02 g of resin in 5 mL of THF, and the resulting solution was injected into the GPC instrument for measurement.

**[Table 2]**

| | Viscosity (cps@25 °C) | Gardner color (#G) | Weight-average molecular weight (g/mol) | Number-average molecular weight (g/mol) |
|---|---|---|---|---|
| Example 1 | 76 | 2.6 | 542 | 427 |
| Example 2 | 90 | 2.9 | 558 | 441 |
| Example 3 | 134 | 3.3 | 581 | 471 |
| Example 4 | 330 | 3.7 | 651 | 598 |
| Example 5 | 82 | 3.9 | 575 | 483 |
| Example 6 | 319 | 3.2 | 639 | 584 |
| Example 7 | 74 | 3.7 | 562 | 476 |
| Example 8 | 593 | 3.0 | 743 | 644 |
| Example 9 | 62 | 3.5 | 561 | 479 |
| Example 10 | 702 | 2.6 | 851 | 709 |
| Example 11 | 467 | 3.2 | 726 | 635 |
| Example 12 | 317 | 2.9 | 647 | 597 |
| Example 13 | 422 | 3.9 | 693 | 614 |
| Comparative Example 1 | 935 | 7.8 | 1125 | 799 |
| Comparative Example 2 | 1093 | 8.3 | 1278 | 893 |

Referring to Table 2, the polymer compositions for coatings according to Examples 1 to 13 had Gardner color values of 4 or less, thereby making it easier to achieve the desired color in the coating compositions.

### Evaluation Example 2: Evaluation of Coating Composition

### Formation of Coating Films

Liquid coating compositions were prepared using the polymer compositions for coatings of Examples 1 to 13 and Comparative Examples 1 and 2 as diluents, and coating films were formed.

A round plastic container was added with 284 g of liquid bisphenol A-type epoxy resin (KE-8128, commercially available from Kolon Industries), 28.4 g of the polymer composition for coatings prepared according to Example 1, 42 g of xylene, and 10 g of MIBK, and the contents were stirred.

Likewise, each polymer composition for coatings prepared according to Examples 2 to 12 and Comparative Example 1 was added, together with the bisphenol A-type epoxy resin, xylene, and MIBK, into a respective round plastic container in the same manner as the polymer composition prepared according to Example 1, and the contents were stirred.

To each round plastic container, 0.6 g of a wetting agent was added, and 21.5 g of Bentone (Viscogen138) was gradually added using a high-speed mixer and dispersed under vigorous agitation until no Bentone particles were visible. Subsequently, 117 g of TiO₂, 358 g of talc, 4.8 g of iron oxide black, and 113 g of barium sulfate (BaSO₄) were added. An additional 23 g of xylene and 25 g of MIBK were then added as solvents, and the mixture was stirred at 1,000 rpm for 15 minutes.

Glass beads were added to the stirred mixture in an amount of 1.5 cups, as measured using a paper cup. The mixture was dispersed using a shaker, with particle size measured every 20 minutes. Dispersion was stopped when the particle size reached 40 µm or less. The glass beads were filtered off, thereby completing preparation of the base component.

A phenalkamine-type curing agent, LITE 2002 (AHEW = 104 g/eq), was mixed with the prepared base component at an epoxy-to-active-hydrogen equivalent ratio of 1:1. The resulting mixture was applied to glass and iron specimens to thicknesses of 75 µm and 120 µm, respectively, and fully dried at room temperature to form coating films.
(1) Mixed viscosity: The KU viscosity of the liquid coating composition was measured using a KU viscometer. The measurement results are set forth in Table 3 below.
(2) Drying time (ASTM D5895): Drying time was determined using an automatic drying-time recorder by observing the trace formed on the coated surface over time. The average time from the beginning to the end of tack-free drying (Stage 2) of the coating film is set forth in Table 3 below.
(3) Adhesion (ASTM D4541, dolly test): After a dolly was attached to the surface of each coating film, the force required to detach the dolly was measured using a portable adhesion tester. The measurement results are set forth in Table 3 below.
(4) Flexural adhesion (flexibility resistance) (ASTM E643, Erichsen cupping test): When each coating film was progressively deformed by indentation (pressing and pushing in), resistance to cracking and resistance to delamination from the metal substrate were evaluated. The measurement results are set forth in Table 3 below. The measurement results are set forth in Table 3 below.
(5) Impact resistance (ASTM D2794): Using a DuPont-type impact tester, a 1 kg weight was dropped from progressively increasing heights, starting from a low height of 400 mm, and the height at which the coating film delaminated (cracked) was measured. The measurement results are set forth in Table 3 below.
(6) Solvent resistance and acid/alkali resistance: Xylene, a 5 % aqueous sulfuric acid solution, and a 5 % caustic soda solution were applied dropwise to each coating film, and the coating films were allowed to stand at room temperature for 72 hours. The degree of damage to each coating film was then visually evaluated. The degree of damage to each coating film was rated on a scale from 1 (Bad) to 10 (Good), where 1 indicates substantial damage and 10 indicates minimal damage. The results are set forth in Table 3 below.

**[Table 3]**

| | Mix viscosity (KU) | Drying time (min, 25 °C) | Adhesion (Mpa) | Flexibility resistance (mm) | Impact resistance (1000N*mm) | Chemical resistance | |
|---|---|---|---|---|---|---|---|
| | | | | | | Solvent resistance | Acid/ base |
| Example 1 | 115.1 | 561 | 5.73 | 7.7 | 650 | 9 | 8/8 |
| Example 2 | 115.8 | 566 | 5.71 | 7.5 | 650 | 9 | 8/8 |
| Example 3 | 116.6 | 578 | 5.70 | 7.1 | 600 | 9 | 8/8 |
| Example 4 | 119.5 | 598 | 5.68 | 7.3 | 500 | 9 | 8/8 |
| Example 5 | 115.5 | 545 | 5.73 | 7.4 | 500 | 9 | 8/8 |
| Example 6 | 119.8 | 603 | 5.65 | 7.5 | 500 | 9 | 8/8 |
| Example 7 | 115.2 | 521 | 5.75 | 7.2 | 500 | 9 | 8/8 |
| Example 8 | 120.4 | 609 | 5.60 | 7.7 | 500 | 9 | 8/8 |
| Example 9 | 114.6 | 479 | 5.77 | 7.0 | 500 | 9 | 8/8 |
| Example 10 | 121.1 | 672 | 5.51 | 7.2 | 500 | 9 | 8/8 |
| Example 11 | 117.8 | 548 | 5.96 | 7.4 | 650 | 9 | 8/8 |
| Example 12 | 116.6 | 559 | 5.77 | 7.5 | 650 | 9 | 8/8 |
| Example 13 | 121.4 | 615 | 5.42 | 6.4 | 400 | 8 | 7/7 |
| Comparative Example 1 | 122.8 | 620 | 5.68 | 5.3 | 450 | 7 | 7/7 |
| Comparative Example 2 | 124.9 | 645 | 5.19 | 5.2 | 400 | 6 | 6/6 |

As shown in Table 3, the coating compositions including the polymer compositions for coatings according to the Examples exhibited favorable viscosity and short drying times, and the resulting coating films exhibited improved adhesion, flexibility resistance, impact resistance, and chemical resistance.

Accordingly, the polymer composition for coatings according to the present disclosure may be used to readily prepare a coating composition that exhibits a shortened drying time and forms a coating film having excellent corrosion resistance, salt resistance, and color properties.

The foregoing Examples and Comparative Examples are presented by way of illustration of the present disclosure and are not to be construed as limiting the present disclosure. As those of ordinary skill in the art to which the present disclosure pertains will be able to practice the present disclosure with various modifications based thereon, the scope of protection of the present disclosure is to be defined by the appended claims.

## Claims

1. A polymer composition for coatings, comprising a polymer that includes:
a unit (a) derived from a cardanol composition; and
a unit (b) derived from a styrenic monomer,
wherein the cardanol composition has a purity greater than 85 %.

2. The polymer composition for coatings of claim 1,
wherein a content of cardol-based compounds in the cardanol composition is less than 15 wt% based on a total weight of the cardanol composition.

3. The polymer composition for coatings of claim 1,
wherein a content of anacardic acid in the cardanol composition is less than 1 wt% based on a total weight of the cardanol composition.

4. The polymer composition for coatings of claim 1,
wherein the cardanol composition has a weight-average molecular weight (Mw) of 400 g/mol to 600 g/mol, and
the cardanol composition has a number-average molecular weight (Mn) of 400 g/mol to 600 g/mol.

5. The polymer composition for coatings of claim 1,
wherein, in the polymer, a molar ratio of the unit (a) derived from the cardanol composition to the unit (b) derived from the styrenic monomer is from 1:15 to 15:1.

6. The polymer composition for coatings of claim 1,
wherein the cardanol composition comprises a compound represented by Formula 1: 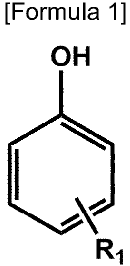
wherein, in Formula 1,
R₁ is an alkyl group having 12 to 18 carbon atoms, an alkenyl group having 12 to 18 carbon atoms, a dienyl group having 12 to 18 carbon atoms, or a trienyl group having 12 to 18 carbon atoms.

7. The polymer composition for coatings of claim 6,
wherein, in Formula 1,
R₁ is a pentadecanyl group, a pentadecenyl group, a pentadecadienyl group, or a pentadecatrienyl group.

8. The polymer composition for coatings of claim 1,
wherein the styrenic monomer is represented by Formula 2: 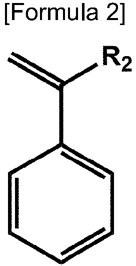
wherein, in Formula 2,
R₂ is hydrogen or an alkyl group having 1 to 15 carbon atoms.

9. The polymer composition for coatings of claim 1,
wherein the styrenic monomer comprises styrene, alpha-methylstyrene, or a combination thereof.

10. The polymer composition for coatings of claim 1,
wherein the polymer is represented by Formula 3: 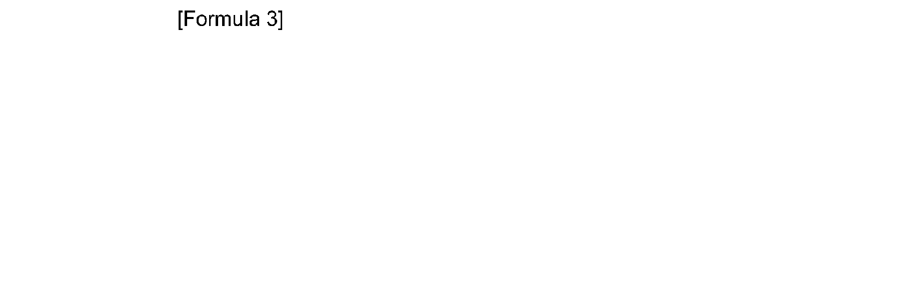 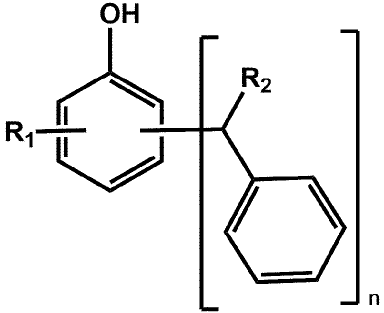
wherein, in Formula 3,
R₁ is an alkyl group having 12 to 18 carbon atoms, an alkenyl group having 12 to 18 carbon atoms, a dienyl group having 12 to 18 carbon atoms, or a trienyl group having 12 to 18 carbon atoms,
R₂ is hydrogen or an alkyl group having 1 to 15 carbon atoms, and n is an integer of 1 to 4.

11. The polymer composition for coatings of claim 10,
wherein, in Formula 3,
n is an integer of 1 or 2.

12. The polymer composition for coatings of claim 1,
wherein the polymer comprises a first compound represented by Formula 3-1, a second compound represented by Formula 3-2, or a combination thereof: 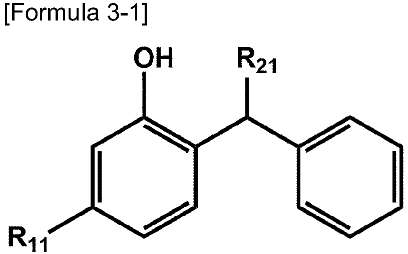 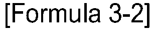 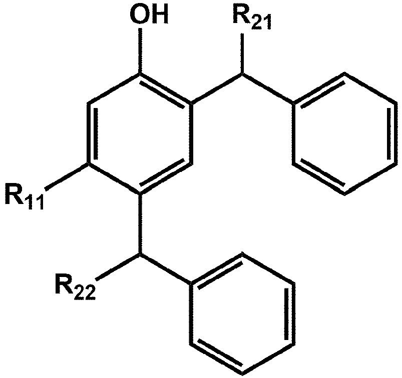
wherein, in Formulas 3-1 and 3-2,
R₁₁ is an alkyl group having 12 to 18 carbon atoms, an alkenyl group having 12 to 18 carbon atoms, a dienyl group having 12 to 18 carbon atoms, or a trienyl group having 12 to 18 carbon atoms, and
R₂₁ and R₂₂ are each independently hydrogen or an alkyl group having 1 to 15 carbon atoms.

13. The polymer composition for coatings of claim 12,
wherein, in the polymer, a ratio of the number of moles of the first compound to the number of moles of the second compound is from 0.1 to 10.

14. The polymer composition for coatings of claim 1,
wherein the polymer composition has a viscosity of 40 to 1,000 cps.

15. The polymer composition for coatings of claim 1,
wherein the polymer composition has a Gardner color value of 4 or less.

16. The polymer composition for coatings of claim 1,
wherein the polymer composition has a weight-average molecular weight (Mw) of 500 g/mol to 1,000 g/mol, and
the polymer composition has a number-average molecular weight (Mn) of 400 g/mol to 800 g/mol.

17. The polymer composition for coatings of claim 1,
wherein the polymer composition is a polymer composition for epoxy coatings.

18. A coating composition comprising the polymer composition for coatings according to claim 1.

19. The coating composition of claim 18, further comprising an epoxy polymer.

20. The coating composition of claim 19,
wherein the epoxy polymer is a bisphenol A-type epoxy polymer.
